# FASCICULE DE BREVET EUROPEEN

(11) **EP 2 653 295 B1**
(45) Date de publication et mention de la délivrance du brevet: **07.06.2017**
(21) Numéro de dépôt: 13164076.5
(22) Date de dépôt: 17.04.2013
(51) Int. Cl.: B29C 70/30, B29C 70/54, B29K 309/08, B29K 301/12

(54) **Procédé de fabrication d'une pièce de matériau composite et dispositif correspondant**
Verfahren zur Herstellung eines Verbundwerkstoffteils und entsprechende Vorrichtung
Method for producing a part made of composite material and corresponding device

(30) Priorité: 17.04.2012 FR 1201128
(43) Date de publication de la demande: 23.10.2013
(73) Titulaire: Dassault Aviation, 75008 Paris (FR)
(72) Inventeur: Ospital, Didier, 64990 SAINT PIERRE D'IRUBE (FR); Bos, Jean-Philippe, 33000 BORDEAUX (FR)
(74) Mandataire: Lavoix

(56) Documents cités:
- WO-A1-2008/135913
- FR-A1- 2 912 077
- LEE MCKAGUE ED - MIRACLE & S L DONALDSON D B: "Thermoplastic resins", 1 décembre 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 132 - 140, XP002677833, ISBN: 978-0-87170-703-1 * page 134 - page 135 * * page 137 *
- MIRACLE D B ET AL: "Curing", 1 janvier 2001 (2001-01-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 486 - 491, XP002563889, ISBN: 978-0-87170-703-1 * page 486 * * figure 1 *
- D. M. Wilson ET AL: "Ceramic fibers" In: "Composites", 1 décembre 2001 (2001-12-01), ASM International, USA, XP055045015, ISBN: 978-0-87-170703-1 pages 46-50,
- WALLENBERG F T ET AL: "Glass fibers", 1 décembre 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 27 - 34, XP002664187, ISBN: 978-0-87170-703-1

## Description

La présente invention concerne un procédé de fabrication d'une pièce en matériau composite, comprenant au moins une première couche d'un matériau composite imprégné d'un premier composant thermoplastique, sur un moule comportant une surface de mise en forme de ladite première couche de matériau composite.

Elle concerne en particulier le drapage de composites haute performance à matrice thermoplastique pour former des pièces utilisées dans le domaine de l'aéronautique.

Les matériaux composites sont généralement obtenus à partir de plis ou couches pré imprégnés. Ces plis sont ainsi constitués d'un assemblage de fibres, qui sont en général des fibres de carbone, d'aramide ou de verre, imprégnées d'une résine constituant la matrice du matériau composite. Les fibres donnent à la structure sa résistance mécanique, tandis que la matrice résineuse lie les fibres entre elles et donne une cohésion à l'ensemble, en terme de liaison, de répartition des contraintes, de résistance chimique, et de contribution à la forme de la pièce finie.

La matrice peut être constituée d'une résine thermodurcissable ou d'une résine thermoplastique. En particulier, alors que la transformation thermique ou polymérisation d'une résine thermodurcissable est irréversible, les composites à matrice thermoplastique peuvent être chauffés et refroidis à l'infini. Par ailleurs, les résines thermodurcissables se présentent à température ambiante sous une forme visqueuse et pégueuse alors que les résines thermoplastiques sont elles dans un état vitreux n'offrant pas de pégosité.

De tels composites sont ainsi obtenus par drapage de plis préimprégnés sur un moule ou outillage de forme quelconque pour obtenir une préforme. Ce drapage est réalisé par empilement manuel ou automatisé des plis, dont le nombre et les orientations dépendent de l'application visée.

Une fois la préforme ainsi drapée sur le moule, une étape de consolidation ou de polymérisation, selon que la résine soit thermoplastique ou thermodurcissable respectivement, est effectuée sur la préforme, afin de lui apporter les caractéristiques mécaniques, physiques et chimiques recherchées. Cette étape est réalisée sur le moule sur lequel la préforme a été drapée, ou sur un autre moule, après transfert de la préforme sur ce dernier.

LEE MCKAGUE, Thermoplastic Resins, ASM Handbook 1er décembre 2001, pages 132 à 140, divulgue un procédé de fabrication d'une pièce en matériau composite. MIRACLE DB, Curing, ASM Handbook 1er janvier 2001, pages 486 à 491, divulgue quant à lui un procédé de consolidation d'une pièce en matériau composite. Enfin, WO 2008/135913 divulgue un procédé de fabrication d'une pièce en matériau composite, comprenant une étape de réalisation d'une préforme suivie d'une étape de consolidation de ladite préforme.

Dans le cadre du drapage de composites à matrice thermoplastique, la cohésion entre les couches est assurée par la fusion de la résine qui est obtenue par chauffage lors du drapage. Une montée en température, de 100 à 400°C selon les résines, est nécessaire pour faire fondre la résine et la rendre pégueuse, c'est-à-dire ayant des propriétés d'adhérence sur elle-même ou sur un autre corps.

Le collage de la résine d'une couche à l'autre doit être suffisant pour assurer la tenue globale de la préforme. Selon le même principe, se pose la question de la tenue du premier pli de composite à matrice thermoplastique déposé sur le moule de drapage.

Pour que le premier pli déposé sur l'outillage tienne sur celui-ci, la résine de ce pli doit entrer en cohésion avec une entité solidaire du moule. En général, le moule est métallique, pour résister à l'apport de chaleur nécessaire au drapage du composite thermoplastique. Or, une résine thermoplastique ne peut adhérer directement sur une surface métallique car le collage métal/résine est inexistant.

Une liaison non robuste entre la préforme drapée et le moule entraîne plusieurs risques, notamment une instabilité de la préforme, la création de replis dans celle-ci, ou une décohésion entre le moule et la préforme, problèmes qui vont à l'encontre des critères de qualité requis pour la préforme.

Pour résoudre ces problèmes, il est connu du document FR-A1-2 912 077 de placer entre le moule de drapage et le premier pli pré imprégné déposé un film de résine thermoplastique. Ce film thermoplastique est maintenu sur l'outillage par un dispositif de mise sous vide. Lorsque le premier pli pré imprégné déposé sur le film thermoplastique est chauffé, en vue de sa consolidation, le film thermoplastique est amolli et s'adapte à la courbure du moule.

La mise en oeuvre d'un tel dispositif présente cependant plusieurs inconvénients. Notamment, en fonction du moyen de chauffe utilisé pour le drapage, les caractéristiques du film thermoplastique, telles que son épaisseur, doivent être adaptées afin de résister aux contraintes thermomécaniques créées lors de la dépose. En effet, plus la chauffe est localisée donc efficace, plus le film thermoplastique doit être épais de manière à ne pas se déformer exagérément et à ne pas se percer lors du drapage. Or, lorsque le film thermoplastique se déforme, il peut générer des plis au droit du drapage, plis dont la formation est aléatoire.

En outre, l'utilisation d'un film thermoplastique ne permet pas d'effectuer un drapage satisfaisant sur une surface complexe non développable. En effet, plus la forme est complexe, plus le film doit être fin pour épouser les accidents de forme, ce qui va à l'encontre de la capacité du film à ne pas se déformer ou se percer lors de l'application d'une chauffe externe.

Par ailleurs, plus le moyen de chauffe est puissant et localisé, plus la préforme subit des contraintes internes dues aux multiples cycles de chauffes et refroidissements. Il en résulte que la préforme a tendance à se déformer par rapport à la forme que l'on souhaite qu'elle prenne, qui correspond à la forme donnée par la surface du moule. Or, l'utilisation d'un film thermoplastique, ramolli lors de la chauffe, ne permet pas au premier pli déposé de résister aux déformations induites par ces fortes contraintes thermomécaniques.

De plus, la résine du premier pli déposé fusionne lors du chauffage avec la résine du film thermoplastique, rendant les deux entités indissociables. Il s'en suit la création au niveau du premier pli d'une zone naturellement riche en résine qui a tendance à modifier localement les caractéristiques physico-chimiques de la pièce en composite.

Ainsi, l'utilisation d'un tel dispositif ne répond pas de manière satisfaisante aux problèmes d'instabilité de la préforme sur le moule, et peut même générer une détérioration de la pièce formée et une non-conformité de la forme et de la constitution de la pièce obtenue avec la pièce souhaitée.

On connaît par ailleurs du document GB-A-1 190 261 un procédé de drapage d'une pièce composite, comprenant les étapes consistant à couvrir un moule de bois d'un film de PVC de surface extérieure gaufrée, à couvrir ce film d'une résine gélatineuse à base polyester ou époxyde, puis à couvrir cette résine gélatineuse d'une feuille de tissu de fibres de verre et d'une couche de résine pour former la pièce. Le film PVC, destiné à donner une surface gaufrée à la pièce formée, ne permet pas de lier le pli en fibre de verre déposé sur le moule de manière satisfaisante.

L'invention a donc pour but de pallier ces inconvénients, et de proposer une installation et un procédé de fabrication par drapage sur un moule d'une structure multicouche en matériau composite permettant d'assurer la cohésion et la tenue du premier pli déposé sur le moule pour former une préforme stable et conforme à celle souhaitée.

A cet effet, l'invention a pour objet un procédé selon la revendication 1.

Suivant des modes particuliers de réalisation, le procédé comporte l'une ou plusieurs des caractéristiques des revendications 2 à 15.

L'invention a également pour objet un dispositif de fabrication d'une pièce de matériau composite selon la revendication 16.

Suivant des modes particuliers de réalisation, le dispositif comporte l'une ou plusieurs des caractéristiques des revendications 17 à 19.

L'invention sera mieux comprise à la lecture de la description qui va suivre, donnée uniquement à titre d'exemple et faite en se référant aux dessins sur lesquels :
- la Figure 1 est un schéma synoptique illustrant les étapes du procédé selon un mode de réalisation de l'invention ;
- la Figure 2 est un schéma en coupe illustrant une phase d'imprégnation d'un pli de verre selon un mode de réalisation,
- la Figure 3 est un schéma en coupe illustrant une phase de fixation d'un pli de verre selon un mode de réalisation,
- la Figure 4 est un schéma en coupe illustrant une étape de drapage d'une préforme selon un mode de réalisation,
- la Figure 5 est un schéma en coupe illustrant une étape de consolidation d'une préforme selon un mode de réalisation,
- la Figure 6 est un schéma en coupe illustrant une étape de consolidation d'une préforme selon une variante,
- la Figure 7 est un schéma en coupe illustrant une étape de consolidation d'une préforme selon une autre variante.

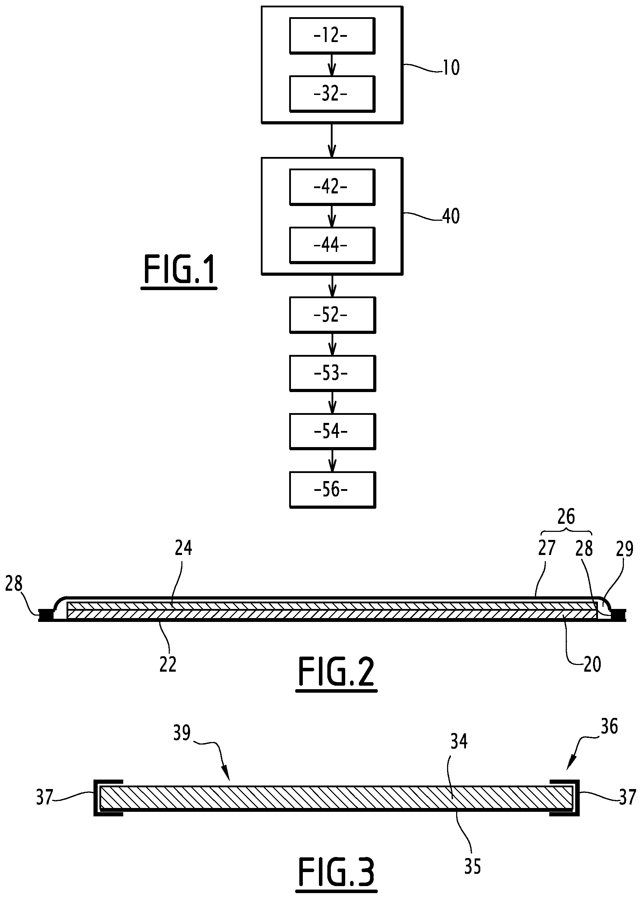

On a représenté sur la Figure 1 les principales étapes d'un procédé de drapage d'une préforme composite à matrice thermoplastique sur un moule de drapage ou outillage, mis en oeuvre au moyen d'un dispositif selon un mode de réalisation de l'invention.

Le procédé comprend notamment une étape 10 de constitution d'un dispositif de drapage et de maintien d'une préforme.

Cette étape 10 comprend une phase 12 de formation d'un complexe de maintien formé par un tissu de fibres de céramique, notamment de fibres de verre, imprégné d'une résine thermoplastique. Le tissu de fibres de céramique sera ainsi appelé par la suite pli de verre.

La phase 12 comprend ainsi l'imprégnation d'un pli de verre avec une résine thermoplastique. Avantageusement, cette résine thermoplastique est de même nature chimique que celle du composite ultérieurement formé, i.e. est constituée d'un composant de même formule chimique que celui formant la résine du composite (les résines utilisées sont par exemple les résines dites « PEEK » polyéther-éther-cétone, « PES » polyéther-sulfone). Il peut également s'agir d'une résine compatible avec celle du composite ultérieurement formé. La compatibilité s'entend par le fait que lorsque l'on mélange deux (ou plus) résines entre elles, se créent des liaisons chimiques qui leur permettent d'avoir une tenue commune recherchée.

On a illustré sur la Figure 2 un exemple de mise en oeuvre de la phase 12 de formation du complexe de maintien. Dans une étape décrite ci-après, le pli de verre 20 est imprégné d'une résine thermoplastique 24 par chauffage dans une étuve.

Le pli de verre 20 est par exemple un tissu de fibres de verre, c'est-à-dire fait de fibres de verre entrecroisées. Le pli de verre 20 a une surface sensiblement identique à celle du moule de drapage destiné à la fabrication de la préforme.

Le pli de verre 20 possède un grain, i.e. possède à sa surface de fines aspérités, conféré par les caractéristiques de ses constituants, notamment son grammage, le taux massique de fibres et l'organisation des fibres dans le pli... Ces fines aspérités sont propres à être comblées par de la résine issue du premier pli de composite déposé, comme décrit ci-après, et donne ainsi la cohésion nécessaire à la tenue globale de l'empilement des plis lors du drapage ultérieur.

La manière dont les fibres du pli 20 sont entrecroisées, c'est-à-dire le mode d'entrecroisement des fibres et leur orientation est choisie en fonction des contraintes de la pièce à draper, en particulier la forme du moule et la résine du composite thermoplastique.

Notamment, si le moule de drapage est développable, le pli de verre est avantageusement un taffetas rigide, de manière à favoriser la tenue mécanique de l'interface. Si le moule est de forme complexe non développable, il est avantageux d'utiliser un pli de verre souple, dont le nombre d'entrecroisements est limité, par exemple un satin.

Par ailleurs, l'orientation principale des fibres de verre du pli peut être ajustée en fonction de la souplesse recherchée par rapport aux directions principales du moule. Par exemple, les orientations des fibres du tissu de verre peuvent être choisies identiques aux directions principales du moule, ou indexées de 45° par rapport à ces orientations principales.

En outre, le grammage et le taux de fibres sont choisis en fonction de la résine thermoplastique utilisée pour la fabrication ultérieure du composite, de manière à ajuster la taille et le nombre d'aspérités du pli de verre 20 à la cohésion recherchée entre ce pli de verre et le composite drapé.

Lors de la phase 12, le pli de verre 20 est déposé sur un outillage 22, par exemple de surface plane. L'outillage 22 est propre à être chauffé en étuve.

La résine thermoplastique est déposée sur le pli de verre 20 sous la forme d'un film 24 de résine thermoplastique, avantageusement de même nature chimique que celle du composite drapé lors de l'étape de fabrication ultérieure, et de surface sensiblement identique à celle du pli de verre 20.

L'épaisseur du film 24 de résine est choisie en fonction du taux de résine souhaité dans le pli de verre une fois celui-ci imprégné. En effet, les caractéristiques d'accroche d'un pli de verre imprégné dépendent notamment du taux de résine qu'il contient. En effet, plus il est imprégné, meilleure est l'accroche, mais moins ce pli est déformable. Le taux de résine souhaité, donc l'épaisseur du film 24 de résine, peut ainsi être ajusté pour être adapté aux contraintes lors de la fabrication de la préforme, telle que la puissance de chauffe apportée lors de cette fabrication, ou pour favoriser la déformabilité du pli de verre imprégné.

Par ailleurs, le taux de résine, donc l'épaisseur du film 24 de résine, ainsi que le nombre et la taille des aspérités de surface du pli de verre 20 sont avantageusement choisis de telle sorte que les forces de cohésion créées lors du drapage de la première couche de composite entre le pli de verre imprégné et la première couche de composite soient inférieures aux forces de cohésion internes entre les différentes couches de composites, comme décrit ci-après. Le film 24 de résine présente à titre d'exemple une épaisseur inférieure à 200 microns et notamment comprise entre 5 et 100 microns.

Des moyens d'étanchéité 26 sont disposés autour du pli de verre 20 et du film 24 de résine, afin de permettre une mise sous vide de cet ensemble. Ces moyens d'étanchéité 26 comprennent par exemple une vessie d'étanchéité 27, disposée au-dessus du film 24 de résine, en recouvrant totalement celle-ci, et un joint 28 de mastic d'étanchéité disposé entre l'outillage 22 et la vessie d'étanchéité 27, à la périphérie de celle-ci, pour former un volume clos 29 incluant le pli de verre 20 et le film 24 de résine. Un trou d'aspiration, non représenté, est percé à travers l'outillage plan 22, et communique avec une pompe à vide. Le profil des aspérités de surface du pli de verre 20 peut être caractérisé par sa rugosité, communément appelée Ra. Le pli de verre 20 présente à titre d'exemple une rugosité supérieure à 5 microns et notamment comprise entre 10 et 100 microns.

L'imprégnation de la résine issue du film 24 dans le pli de verre 20 est effectuée en réalisant le vide à l'intérieur du volume clos 29 au moyen de la pompe à vide tout en plaçant l'ensemble constitué de l'outillage 22, des moyens d'étanchéité 26, du pli de verre 20 et du film 24 de résine dans une étuve dont la température est au moins égale à la température de fusion de la résine thermoplastique formant le film 24. Par exemple, le chauffage est réalisé à une température de 390°C pendant une durée de l'ordre de 15mn.

Le chauffage sous vide du film 24 de résine, disposé sur le pli de verre 20, provoque une migration de la résine issue du film 24 à l'intérieur des aspérités du pli de verre 20. A l'issue de la phase 12, les moyens d'étanchéité 26 sont enlevés et le pli de verre imprégné de résine thermoplastique ainsi formé, également appelé par la suite complexe de maintien, est extrait de l'outillage 22. L'outillage 22, avant la phase d'imprégnation, est préalablement enduit d'un agent démoulant pour pouvoir en extraire facilement le complexe de maintien après consolidation. Une interface démoulante telle un film peut également remplacer l'agent démoulant. De même, l'interface entre la vessie 27 et le film 24 doit être démoulante.

Le pli obtenu présente à titre d'exemple une épaisseur inférieure à 1 mm et notamment comprise entre 0.1 mm et 0.5 mm. Il présente avantageusement un grammage inférieur à 1000 g/m² et notamment compris entre 100 g/m² et 500 g/m².

Le pli présente une tenue mécanique propre, et est ainsi manipulable et transportable d'un seul tenant, la résine restant solidaire des fibres de verre. Dans certains cas, le pli est déformable au toucher.

L'étape 10 comprend par ailleurs une phase 32 d'assemblage du complexe de maintien ainsi formé sur le moule de drapage, pour former le dispositif de drapage et de maintien de la préforme, propre à assurer la stabilité de la préforme lors de sa fabrication. Le complexe de maintien est maintenu fixement sur le moule de drapage par des moyens de maintien, des moyens de bridage dans l'exemple illustré, assurant sa stabilité par rapport à ce moule et sa résistance aux efforts qui seront exercés lors de la fabrication ultérieure de la préforme.

Un exemple de mise en oeuvre de la phase 32 d'assemblage du complexe de maintien sur un moule de drapage destiné à la fabrication de la préforme est illustré sur la Figure 3. Dans ce mode de réalisation, une surface d'un complexe 34 de maintien obtenu à l'issue de la phase 12 est placée contre la surface supérieure d'un moule 35 de drapage, i.e. la surface de ce moule 35 destinée à recevoir les couches successives de composite. Le moule 35 est par exemple un moule métallique. Sur l'exemple représenté, la surface du moule 35 a une forme plane, mais toute autre forme peut être envisagée.

Des moyens de maintien 36 assurent la stabilité du complexe 34 par rapport au moule. Dans l'exemple représenté, ces moyens de maintien 36 comprennent des barrettes métalliques 37 pinçant le complexe 34 contre le moule 35 sur l'ensemble du pourtour du moule 35. Les moyens de maintien 36 sont propres à maintenir le complexe sur le moule dans une position fixe lors du drapage des couches de composite. Le moule 35 et le complexe 34 ainsi assemblés forment un dispositif 39 de drapage et de maintien d'une préforme.

Le procédé comprend ensuite une étape 40 de fabrication d'une préforme par drapage, comprenant le drapage 42, i.e. le dépôt assisté par chauffage, d'une première couche de composite à matrice thermoplastique sur le complexe de maintien du dispositif 39, suivi du drapage 44 d'une ou plusieurs couches de composite à matrice thermoplastique par empilement sur la couche précédemment déposée.

On appelle ainsi préforme un ensemble de couches de composite superposées, avant consolidation, présentant le même contour que celui de la pièce finie. Lors de cette étape de drapage, la première couche déposée sur le complexe de maintien entre en cohésion avec ce complexe, ce qui assure la stabilité de la préforme sur le moule de drapage.

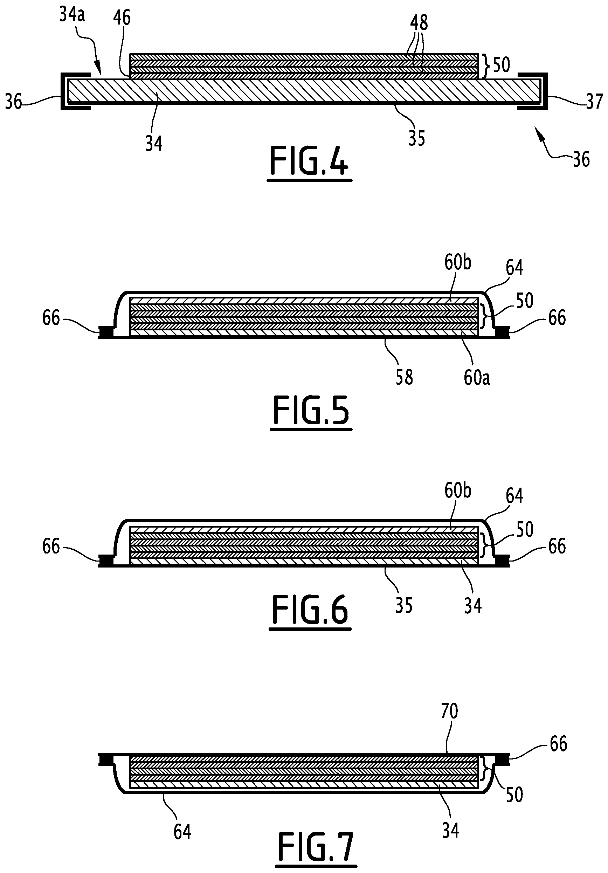

L'étape 40 de fabrication de la préforme par drapage est illustrée sur la Figure 4.

Ce drapage est par exemple réalisé au moyen d'une machine telle qu'une machine de placement de fibres ou une machine à napper (cette dernière étant communément appelée machine de drapage). Cette machine est munie d'une tête de drapage comprenant un rouleau de compactage qui a pour fonction de presser le composite drapé sur le moule. La machine est par ailleurs munie d'une source de chaleur, avantageusement intégrée à la tête de drapage, propre à chauffer les bandes de composite lors du drapage jusqu'à la température de fusion de la résine du composite. Il s'agit par exemple d'une torche de projection d'air chaud ou d'un gaz inerte, d'un laser, d'ultrasons, ou de rayons infra rouge ou micro ondes.

Lors de la phase 42 de drapage, une première couche 46 de composite à matrice thermoplastique est déposée sur le dispositif 39, plus précisément sur la surface supérieure 34a du complexe 34, c'est-à-dire la surface opposée à celle en contact avec le moule de drapage 35. Cette phase 42 est réalisée en déposant et en pressant plusieurs bandes de composite adjacentes sur la surface supérieure 34a du complexe 34, au moyen de la tête de drapage de la machine de drapage, de manière à couvrir l'ensemble ou une partie seulement de cette surface supérieure 34a.

La couche de composite 46 présente initialement une tenue mécanique propre pour être manipulable d'un seul tenant. Ainsi, la matrice en thermoplastique est solide et reste solidaire de l'assemblage de fibres.

Chacune de ces bandes est composée d'un assemblage de fibres, par exemple en carbone, aramide ou verre, imprégnées d'une résine thermoplastique, avantageusement identique à celle dont le pli de verre 20 est imprégné. Ladite résine thermoplastique a par exemple, à la température de drapage, une viscosité dynamique comprise entre 1000 et 3000 Pa.s.

Chacune des bandes de composite est chauffée lors de son dépôt sur le complexe 34, jusqu'à une température au moins égale à la température de fusion de la résine. Ce chauffage provoque la fusion de la résine du composite et celle du complexe 34, qui deviennent pégueuses. Cette fusion entraîne ainsi le mélange de la résine du composite à celle du complexe, ce qui permet d'assurer la solidarisation de la bande ainsi déposée avec le complexe 34. La stabilité du composite par rapport au moule 35 de drapage est ainsi assurée.

Le chauffage est effectué par la source de chaleur de la machine de drapage.

Aucune résine additionnelle n'est ajoutée ou interposée entre le complexe 34 et le composite 46 qui adhèrent l'un à l'autre par simple chauffage.

Cette phase 42 est suivie du drapage 44 d'une ou plusieurs couches supplémentaires de composite 48, chacune empilée sur la couche précédente. Le drapage de chacune de ces couches 48 est réalisé en déposant, en pressant et en chauffant plusieurs bandes de composite adjacentes sur la couche précédente, par exemple au moyen de la tête de drapage équipée d'un rouleau et d'une source de chaleur, de manière à couvrir l'ensemble ou une partie seulement de la couche précédente. Le chauffage provoque la fusion de la résine de la bande déposée et de celle de la partie de la couche précédente couverte par la bande déposée, entraînant le mélange de ces résines et assurant la cohésion de la bande ainsi déposée avec la couche précédente.

Une préforme 50, constituée de l'ensemble des couches ainsi déposées, est obtenue à l'issue de l'étape 40.

Cette étape 40 de fabrication est suivie d'une étape 52 lors de laquelle les moyens de maintien 36 sont retirés. Puis, lors d'une étape 53, le complexe 34 et la préforme 50, toujours solidaires l'un de l'autre, sont désolidarisés du moule 35 de drapage.

Lors d'une étape 54 de pelage, le complexe 34 est alors désolidarisé de la préforme 50 par pelage. En effet, grâce au choix du tissu de fibres de verre du complexe 34 et notamment sa rugosité (i.e. le profil des aspérités de surface) et grâce au choix de la quantité de résine imprégnée dans ce complexe 34, les forces de cohésion résiduelles existant entre le complexe 34 et la première couche 46 de composite déposée sont inférieures aux forces de cohésion internes entre les couches 46 et 48 de composite, le pelage entraîne la désolidarisation du complexe 34 de la couche 46 et non pas la désolidarisation de couches 46 et 48 de composite entre elles.

Puis, lors d'une étape 56 de consolidation, illustrée sur la Figure 5, la préforme 50 est consolidée par apport de chaleur, notamment en autoclave ou en étuve.

A cette fin, la préforme 50 est déposée sur un outillage 58 de consolidation, cet outillage 58 pouvant être le moule de drapage 35 ou un moule de forme approchante. L'outillage 58 est préalablement enduit d'un agent démoulant pour pouvoir en extraire facilement la pièce après consolidation. Une interface démoulante telle un film peut également remplacer l'agent démoulant. Un premier drain 60a, destiné à absorber la résine en excès, est intercalé entre la préforme 50 et l'outillage 58 de consolidation, et un deuxième drain 60b est posé sur l'ensemble de la préforme 50. En fonction du besoin de drainage global sur la pièce lors de la consolidation, le drain 60a peut être omis.

Une vessie d'étanchéité 64 est disposée au-dessus de l'ensemble formé par les drains 60a, 60b et la préforme 50, en recouvrant totalement celles-ci, et un joint 66 de mastic d'étanchéité est disposé entre l'outillage 58 de consolidation et la vessie d'étanchéité 64 à la périphérie de celle-ci. L'interface entre le drain 60b et la vessie 64 doit également être démoulante. Par exemple, le drain 60b est enduit d'un agent démoulant. Un trou d'aspiration, non représenté, est percé à travers l'outillage 58 de consolidation, et communique avec une pompe à vide pour permettre la mise sous vide de cet ensemble.

La consolidation de la préforme est effectuée, après mise sous vide de cet ensemble, par apport de chaleur en autoclave ou en étuve, par exemple à une température de 390°C.

Le procédé et le dispositif selon l'invention permettent ainsi d'assurer, lors du drapage d'une préforme de composite, la cohésion et la tenue nécessaire à ce drapage entre la première couche de composite et le moule utilisé. Le pli de verre imprégné forme ainsi une interface entre la première couche de composite et le moule qui n'impose pas de contraintes pour la réalisation du drapage et permet d'obtenir une préforme conforme à celle prévue.

Par ailleurs, l'utilisation d'un pli de fibres de verre, qui est un matériau incombustible, permet de chauffer ce pli à haute température sans altérer ses propriétés mécaniques. Contrairement à un film de résine seul, le pli de verre imprégné 34 possède une trame constituée de fibres, ce qui lui permet de ne pas être déformé à haute température même par les efforts exercés par la tête de drapage. Ainsi, le pli de verre imprégné 34 ne génère aucun pli parasite à sa surface qui pourrait perturber la stabilité de la préforme à constituer.

Etant donné que les caractéristiques du pli de verre imprégné 34 ne sont pas impactées par la chauffe lors du drapage, la seule fonction mécanique dont il doit faire preuve est la résistance aux efforts générés par la machine de drapage. Il n'est donc pas nécessaire de maintenir le pli de verre imprégné 34 sur le moule 35 par un dispositif de mise sous vide comme l'imposerait un film thermoplastique.

De plus, le pli de verre en lui-même est neutre au niveau physico-chimique. Il est donc compatible avec le composite à matrice thermoplastique utilisé pour la fabrication de la préforme 50. Contrairement à un film thermoplastique qui se mélange à la pièce finie, le pli de verre imprégné 34 ne modifie que peu les caractéristiques de la pièce finie. La teneur réglée en résine du complexe 34 permet de ne pas changer complètement les caractéristiques physico-chimiques de la pièce au droit de là où il est interposé.

En outre, comme le pli de verre imprégné 34 reste poreux après le drapage, il peut être pelé de la préforme construite avant sa consolidation 56. Il n'interfère donc aucunement dans les caractéristiques de la préforme 50, une fois le drapage de celle-ci finalisé.

Il devra être compris que les exemples de réalisation présentés ci-dessus ne sont pas limitatifs.

Notamment, selon un mode de réalisation alternatif, la phase 12 de formation du complexe de maintien est réalisée non pas au moyen d'une étuve, mais au moyen d'une presse chauffante. Dans ce mode de réalisation, le montage illustré sur la Figure 2 est modifié en remplaçant les moyens 26 d'étanchéité par une protection disposée sur le film de résine 24, i.e. destinée à être interposée entre ce film 24 de résine et le couvercle de la presse.

Plus généralement, tout autre moyen de chauffe capable de générer une pression sur le pli de verre 20 et le film 24 de résine peut être utilisé.

Selon un autre mode de réalisation, la phase 12 de formation du complexe 34 n'est pas mise en oeuvre, et le pli de verre 20 non imprégné est assemblé sur le moule 35 de drapage lors de la phase 32 d'assemblage. Ce mode de réalisation est avantageusement mis en oeuvre lorsque la pégosité et la rhéologie de la résine en fusion du premier pli de composite déposé, activées par chauffage, couplées au grain du pli de verre 20, sont suffisants pour assurer l'effort de cohésion nécessaire entre le pli de verre 20 et la première couche 46 de composite déposée. Cela est notamment le cas lorsque la viscosité dynamique de la résine en fusion est comprise entre 1000 et 3000 Pa.s, le tissage du pli de verre 20 est compris entre 100 et 200 fils de chaîne/dm et 100 et 200 fils de trame/dm, et le grammage du pli de verre 20 est compris entre 100 et 400g/m². Ainsi, lorsque les bandes de composite destinées à former la première couche 46 sont déposées et chauffées, la résine contenue dans ces bandes entre en fusion et migre à l'intérieur des aspérités du pli de verre 20. Le pli de verre est ainsi partiellement imprégné non plus lors de la phase 12 mais pendant la phase 42 de drapage de la première couche de composite.

Par ailleurs, selon un mode de réalisation particulier, le pli de verre 20 est initialement enduit d'un agent démoulant, par exemple un polymère siliconé.

Selon ce mode de réalisation, l'étape 54 de pelage du complexe 34 de la préforme 50 est réalisée non pas avant mais après la consolidation, le complexe 34 restant solidaire de la préforme 50 lors de l'étape 56 de consolidation.

Selon une variante de ce mode de réalisation, illustrée sur la Figure 6, la consolidation est réalisée directement sur le moule 35 de drapage. Ainsi, l'étape 53 de désolidarisation du complexe 34 et de la préforme 50 par rapport au moule 35 de drapage est mise en oeuvre non pas avant la consolidation, mais à l'issue de celle-ci. Le complexe 34 est alors utilisé comme matière drainante lors de l'étape 56 de consolidation, et le premier drain 60a n'est alors plus nécessaire. En fonction du besoin de drainage global sur la pièce lors de la consolidation, le drain 60b peut éventuellement être omis.

Comme décrit ci-dessus, l'interface entre le drain 60b et la vessie 64 doit être démoulante. Si le drain 60b est omis, l'interface entre la préforme 50 et la vessie 64 doit être démoulante.

A l'issue de l'étape 56 de consolidation, le complexe 34 et la pièce consolidée, toujours solidaires l'un de l'autre, sont désolidarisés du moule 35 de drapage, puis le complexe 54 est désolidarisé par pelage de la pièce consolidée. Ce pelage est possible en raison de l'agent démoulant dont est muni le pli de verre 20, donc le complexe 34.

Selon cette variante, le drapage 40 et la consolidation 56 peuvent être réalisés par une machine unique, propre à réaliser le drapage et à consolider la préforme sur le moule 35 de drapage, par apport d'une densité de chaleur suffisamment élevée et génération d'un taux de vide suffisamment faible pour que la consolidation ultérieure de la préforme dans un moyen industriel de type étuve ou autoclave puisse être évitée.

A noter que la consolidation peut être réalisée directement sur le moule 35 de drapage que la phase 12 de formation du complexe 34 soit mise en oeuvre ou non, sous réserve que le tissu de verre soit muni d'un agent démoulant.

Selon une autre variante, la préforme 50 est consolidée sur un outillage de consolidation distinct du moule 35 de drapage, par exemple sur un outillage 70 de forme complémentaire à celle du moule 35 de drapage, comme illustré sur la figure 7. L'outillage 70 est préalablement enduit d'un agent démoulant pour pouvoir en extraire facilement la pièce après consolidation. Une interface démoulante telle qu'un film peut également remplacer l'agent démoulant. Selon cette variante, la surface supérieure de la préforme 50, i.e. sa surface opposée au complexe 34, est placée directement contre l'outillage 70 de consolidation. La vessie d'étanchéité 64 est disposée sur la surface du complexe 34 opposée à la préforme de l'ensemble, et le joint 66 de mastic d'étanchéité est disposé entre l'outillage 70 de consolidation et la vessie d'étanchéité 64 à la périphérie de celle-ci. Dans cette variante, l'usage d'un drain supplémentaire n'est pas nécessaire, le complexe 34 faisant office de drain via les aspérités du tissu de verre.

Selon des modes de réalisation alternatifs, les barrettes métalliques 37 décrites en référence à la Figure 3 sont remplacées par d'autres moyens de maintien propre à assurer la tenue mécanique du complexe 34 sur le moule 35 de drapage.

Ainsi, selon une variante, le complexe 34 est pincé entre le moule 35 de drapage et des barrettes métalliques dont l'effort presseur est assuré par des aimants intégrés dans le moule de drapage.

Selon une autre variante, le complexe est appliqué et maintenu sur le moule 35 de drapage par un ou des systèmes de mise sous tension sur ses bords, par exemple des tendeurs à cliquet.

Alternativement, si le complexe 34 n'est pas trop poreux, il peut être tendu et maintenu sur le moule 35 de drapage par un système de mise sous vide et un joint de mastic d'étanchéité.

Selon une autre variante, le complexe est tenu sur l'outillage au moyen d'un adhésif tel que de la colle ou un ruban adhésif à double face, interposé entre le moule 35 de drapage et le complexe 34, sur toute ou partie de la surface du complexe 34, ou sur toute ou partie de la périphérie du complexe 34.

Par ailleurs, selon un mode de réalisation particulier, le pli de verre 20 n'est pas un tissu de fibres de verre, c'est-à-dire constitué de fibres de verre entrecroisées, mais une nappe de fibres de verre, constituée de fibres de verre unidirectionnelles. Alternativement, le pli de verre 20 est constitué d'un non tissé ou mat de fibres de verre discontinues orientées de manière aléatoire. L'utilisation d'une nappe ou d'un mat permet notamment d'adapter le pli de verre 20 à un moule de forme particulière et d'obtenir un grammage et un taux de porosité particuliers, propres à ces applications. Il doit toutefois conserver des caractéristiques de tenue mécanique suffisante.

En outre, les fibres de verre du pli 20 peuvent être remplacées par des fibres de céramique de nature différente, par exemple des fibres de silice.

Selon un autre mode de réalisation, le complexe de maintien 34 est formé à partir de plusieurs morceaux de pli de verre couvrant chacun une portion du moule 35 de drapage et se recouvrant sur des portions de chevauchement ou en bord à bord. Un tel mode de réalisation est par exemple mis en oeuvre lorsque la surface du moule 35 est complexe et ne peut être recouverte par un pli unique, ou lorsque la surface du moule 35 à recouvrir est supérieure à la taille maximale du pli de verre dont on dispose pour remplir la fonction d'interface avec le premier pli de composite.

Comme précédemment décrit, les morceaux de plis de verre sont pelés un à un de la préforme, avant ou après consolidation selon qu'ils sont enrobés ou non d'un agent démoulant.

En outre, le procédé et le dispositif selon l'invention peuvent également être mis en oeuvre pour le drapage de composites à fibres sèches. Ces composites sont faits de fibres faiblement enduites d'un agent de maintien thermoplastique ou liant thermoplastique. Lors du drapage, le chauffage des bandes déposées entraîne la fusion du liant thermoplastique lorsqu'on le chauffe, ce qui permet de créer une cohésion entre les différentes couches. Dans ce mode de réalisation, la résine du composite à matrice thermoplastique est remplacée par l'agent de liaison thermoplastique et la résine d'imprégnation du pli de verre est remplacée par ce même agent de liaison ou toute autre résine compatible avec la préforme que l'on cherche à construire.

Ces préformes de fibres sèches peuvent être transformées a posteriori par injection, RTM (pour « Resin Transfer Molding », i.e. moulage par transfert de résine) ou infusion de résine, afin de constituer des pièces composites à part entière.

Par ailleurs, les caractéristiques techniques des modes de réalisation et variantes mentionnées ci-dessus peuvent être combinées entre elles.

Selon une variante, les moyens de maintien ne sont pas des moyens de bridage, mais sont par exemple des moyens de maintien par collage.

## Revendications

1. Procédé de fabrication d'une pièce en matériau composite, comprenant au moins une première couche (46) d'un matériau composite imprégné d'un premier composant thermoplastique, sur un moule (35) comportant une surface de mise en forme de ladite première couche (46) de matériau composite, **caractérisé en ce qu'**il comprend :
- le dépôt (32), contre ladite surface de mise en forme, d'une couche (20, 34) de fibres de céramique, propre à adhérer à ladite première couche (46) de matériau composite lors d'un drapage de ladite première couche (46) de matériau composite sur ladite couche (20, 34) de fibres de céramique,
- le maintien de ladite couche (20, 34) de fibres de céramique par des moyens (36) de maintien,
- le drapage (42) sur ladite couche (20, 34) de fibres de céramique de ladite première couche (46) de matériau composite, et
- la désolidarisation (53) de ladite couche (20, 34) de fibres de céramique de ladite première couche (46) de matériau composite, postérieurement à ladite étape de drapage (42).

2. Procédé selon la revendication 1, **caractérisé en ce que** ladite couche (34) de fibres de céramique est imprégnée d'un deuxième composant thermoplastique, l'étape de drapage comportant la mise en contact dudit deuxième composant thermoplastique avec ledit premier composant thermoplastique.

3. Procédé selon la revendication 2, **caractérisé en ce que** lesdits premier et deuxième composants thermoplastiques sont de même nature chimique.

4. Procédé selon l'une quelconque des revendications 2 ou 3, **caractérisé en ce qu'**il comprend une phase (12) d'imprégnation de ladite couche (34) de fibres de céramique par ledit deuxième composant thermoplastique, réalisée avant le dépôt de ladite couche (34) de fibres de céramique contre ladite surface de mise en forme.

5. Procédé selon la revendication 4, **caractérisé en ce que** ladite étape (12) d'imprégnation comprend le dépôt d'un pli (20) de fibres de céramique sur un outillage (22), le dépôt sur ledit pli (20) de fibres de céramique d'un film (24) dudit deuxième composant thermoplastique et le chauffage sous vide ou le chauffage en surpression dudit pli (20) de fibres de céramique et dudit film (24).

6. Procédé selon la revendication 5, **caractérisé en ce que** ledit film (24) dudit deuxième composant thermoplastique présente une épaisseur inférieure à 200 microns, notamment comprise entre 5 et 100 microns.

7. Procédé selon la revendication 3, **caractérisé en ce qu'**il comprend une phase d'adhésion de ladite couche (34) de fibres de céramique avec ladite première couche de matériau composite, réalisée lors du drapage de ladite première couche de matériau composite (46), par fusion et mélange du premier composant thermoplastique de ladite première couche de matériau composite (46) avec le deuxième composant thermoplastique imprégnant ladite couche (34) de fibres de céramique.

8. Procédé selon la revendication 1, **caractérisé en ce que** la couche de fibres de céramique (20) est constituée par un pli de fibres de céramique non imprégné.

9. Procédé selon l'une quelconque des revendications précédentes, **caractérisé en ce qu'**il comprend en outre le drapage (44) d'au moins une deuxième couche (48) de matériau composite sur ladite première couche (46).

10. Procédé selon l'une quelconque des revendications précédentes, **caractérisé en ce qu'**il comprend en outre une étape (56) de consolidation de ladite pièce en matériau composite par chauffage.

11. Procédé selon l'une quelconque des revendications précédentes, **caractérisé en ce que** ladite couche (20, 34) de fibres de céramique comprend un agent démoulant.

12. Procédé selon la revendication 10 ou 11, **caractérisé en ce que** ladite étape (53) de désolidarisation est mise en oeuvre après ladite étape (56) de consolidation.

13. Procédé selon l'une quelconque des revendications précédentes, **caractérisé en ce que** la dite couche (20, 34) de fibres de céramique est formée à partir d'au moins deux morceaux de pli de céramique couvrant chacun une portion du moule (35) et se recouvrant sur des portions de chevauchement ou en bord à bord.

14. Procédé selon l'une quelconque des revendications précédentes, caractéristique en ce que ledit premier composant thermoplastique est un agent de maintien de composite à fibres sèches.

15. Procédé selon l'une quelconque des revendications précédentes, **caractérisé en ce que** ladite couche (20, 34) de fibres de céramique présente une rugosité supérieure à 5 microns, notamment comprise entre 10 et 100 microns.

16. Dispositif (39) de fabrication d'une pièce de matériau composite comprenant au moins une première couche (46) d'un matériau composite imprégné d'un premier composant thermoplastique, ledit dispositif comprenant un moule (35) comportant une surface de mise en forme de ladite couche de matériau composite, et étant **caractérisé en ce qu'**il comprend en outre :
- une couche (20, 34) de fibres de céramique, disposée contre ladite surface de mise en forme, propre à adhérer à ladite première couche (46) de matériau composite lors d'un drapage de ladite première couche (46) de matériau composite sur ladite couche (20, 34) de fibres de céramique,
- des moyens (36) de maintien de ladite couche (20, 34) de fibres de céramique contre ladite surface de mise en forme, et
- des moyens de drapage de ladite première couche (46) de matériau composite sur ladite couche (20, 34) de fibres de céramique.

17. Dispositif (39) selon la revendication 16, **caractérisé en ce que** ladite couche (34) de fibres de céramique est imprégnée d'un deuxième composant thermoplastique.

18. Dispositif (39) selon l'une quelconque des revendications 16 ou 17, **caractérisé en ce que** ladite couche (20) de fibres de céramique est propre à adhérer avec le premier composant thermoplastique de ladite première couche (46) de matériau composite lors d'un drapage de ladite première couche (46) de matériau composite.

19. Dispositif (39) selon l'une quelconque des revendications 16 à 18, **caractérisé en ce que** ladite couche (34) de fibres de céramique comprend un agent démoulant.

## Patentansprüche

1. Verfahren zum Herstellen eines Teils aus Verbundmaterial, aufweisend mindestens eine erste Schicht (46) eines mit einer ersten thermoplastischen Komponente imprägnierten Verbundmaterials, auf einer Form (35), die eine Oberfläche zum Formen der ersten Verbundmaterialschicht (46) aufweist, **dadurch gekennzeichnet, dass** es aufweist:
- Ablagern (32), auf der Formungsoberfläche, einer Schicht (20, 34) aus Keramikfasern, die geeignet ist, bei einem Drapieren der ersten Schicht (46) aus Verbundmaterial auf die Keramikfaserschicht (20, 34) an der ersten Verbundmaterialschicht (46) anzuhaften,
- Halten der Keramikfaserschicht (20, 34) mittels Haltemitteln (36),
- Drapieren (42) der ersten Verbundmaterialschicht (46) auf die Keramikfaserschicht (20, 34), und
- Trennen (53) der Keramikfaserschicht (20, 30) von der ersten Verbundmaterialschicht (46) im Anschluss an den Schritt des Drapierens (42).

2. Verfahren gemäß Anspruch 1, **dadurch gekennzeichnet, dass** die Keramikfaserschicht (34) mit einer zweiten thermoplastischen Komponente imprägniert wird, wobei der Schritt des Drapierens das Kontaktieren der zweiten thermoplastischen Komponente mit der ersten thermoplastischen Komponente aufweist.

3. Verfahren gemäß Anspruch 2, **dadurch gekennzeichnet, dass** die erste und die zweite thermoplastische Komponente gleicher chemischer Beschaffenheit sind.

4. Verfahren gemäß irgendeinem der Ansprüche 2 oder 3, **dadurch gekennzeichnet, dass** es eine Phase (12) des Imprägnierens der Keramikfaserschicht (34) durch die zweite thermoplastische Komponente aufweist, die vor dem Ablagern der Keramikfaserschicht (34) auf der Formungsoberfläche durchgeführt wird.

5. Verfahren gemäß Anspruch 4, **dadurch gekennzeichnet, dass** der Schritt (12) des Imprägnierens aufweist: Ablagern einer Lage (20) von Keramikfasern auf einem Werkzeug (22), Ablagern eines Films (24) der zweiten thermoplastischen Komponente auf der Lage (20) aus Keramikfasern und Vakuumerhitzen oder Überdruckerhitzen der Lage (20) von Keramikfasern und des Films (24).

6. Verfahren gemäß Anspruch 5, **dadurch gekennzeichnet, dass** der Film (24) der zweiten thermoplastischen Komponente eine Dicke von kleiner als 200 µm, insbesondere von zwischen 5 und 100 µm aufweist.

7. Verfahren gemäß Anspruch 3, **dadurch gekennzeichnet, dass** es eine Phase des Zusammenhaftens der Keramikfaserschicht (34) mit der ersten Verbundmaterialschicht aufweist, die während des Drapierens der ersten Verbundmaterialschicht (46) durch Schmelzen und Mischen der ersten thermoplastischen Komponente der ersten Verbundmaterialschicht (46) mit der zweiten thermoplastischen Komponente durchgeführt wird, die die Keramikfaserschicht (34) imprägniert.

8. Verfahren gemäß Anspruch 1, **dadurch gekennzeichnet, dass** die Keramikfaserschicht (20) aus einer nicht imprägnierten Lage von Keramikfasern gebildet wird.

9. Verfahren gemäß irgendeinem der vorhergehenden Ansprüche, **dadurch gekennzeichnet, dass** es ferner das Drapieren (44) mindestens einer zweiten Verbundmaterialschicht (48) auf der ersten Schicht (46) aufweist.

10. Verfahren gemäß irgendeinem der vorhergehenden Ansprüche, **dadurch gekennzeichnet, dass** es ferner einen Schritt (56) des Verfestigens des Verbundmaterialteils durch Erhitzen aufweist.

11. Verfahren gemäß irgendeinem der vorhergehenden Ansprüche, **dadurch gekennzeichnet, dass** die Keramikfaserschicht (20, 34) ein Entformungsmittel aufweist.

12. Verfahren gemäß Anspruch 10 oder 11, **dadurch gekennzeichnet, dass** der Schritt (53) des Trennens nach dem Schritt (56) des Verfestigens durchgeführt wird.

13. Verfahren gemäß irgendeinem der vorhergehenden Ansprüche, **dadurch gekennzeichnet, dass** die Keramikfaserschicht (20, 34) aus mindestens zwei Keramiklagenstücken gebildet wird, die jeweils einen Abschnitt der Form (35) bedecken und sich an Überlappungsabschnitten oder Kante an Kante bedecken.

14. Verfahren gemäß irgendeinem der vorhergehenden Ansprüche, **dadurch gekennzeichnet, dass** die erste thermoplastische Komponente ein Mittel zum Halten eines Trockenfaserverbundes ist.

15. Verfahren gemäß irgendeinem der vorhergehenden Ansprüche, **dadurch gekennzeichnet, dass** die Keramikfaserschicht (20, 34) eine Rauigkeit von größer als 5 µm, insbesondere von zwischen 10 und 100 µm aufweist.

16. Vorrichtung (39) zum Herstellen eines Verbundmaterialteils, aufweisend mindestens eine erste Schicht (46) aus einem Verbundmaterial, die mit einer ersten thermoplastischen Komponente imprägniert ist, wobei die Vorrichtung eine Form (35) aufweist, die eine Oberfläche zum Formen der Verbundmaterialschicht aufweist, und **dadurch gekennzeichnet ist, dass** sie ferner aufweist:
- eine Schicht (20, 34) aus Keramikfasern, die an der Formungsschicht angeordnet ist, die geeignet ist, bei einem Drapieren der ersten Verbundmaterialschicht (46) auf die Keramikfaserschicht (20, 34) an der ersten Verbundmaterialschicht (46) zu haften,
- Mittel (36) zum Halten der Keramikfaserschicht (20, 34) an der Formungsfläche, und
- Mittel zum Drapieren der ersten Verbundmaterialschicht (46) auf die Keramikfaserschicht (20, 34).

17. Vorrichtung (39) gemäß Anspruch 16, **dadurch gekennzeichnet, dass** die Keramikfaserschicht (34) mit einer zweiten thermoplastischen Komponente imprägniert ist.

18. Vorrichtung (39) gemäß irgendeinem der Ansprüche 16 oder 17, **dadurch gekennzeichnet, dass** die Keramikfaserschicht (20) geeignet ist, um bei einem Drapieren der ersten Verbundmaterialschicht (46) mit der ersten thermoplastischen Komponente der ersten Verbundmaterialschicht (46) zusammen zu haften.

19. Vorrichtung (39) gemäß irgendeinem der Ansprüche 16 bis 18, **dadurch gekennzeichnet, dass** die Keramikfaserschicht (34) ein Entformungsmittel aufweist.

## Claims

1. A method for manufacturing a part of composite material, comprising at least one first layer (46) of a composite material impregnated with a first thermoplastic component, on a mould (35) comprising a shaping surface for said first layer (46) of composite material, **characterised in that** said method comprises:
- deposition (32), against said shaping surface, of a layer (20, 34) of ceramic fibres, suitable for adhering to said first layer (46) of composite material during lay-up of said first layer (46) of composite material on said layer (20, 34) of ceramic fibres,
- holding said layer (20, 34) of ceramic fibres using holding means (36),
- lay-up (42) on said layer (20, 34) of ceramic fibres of said first layer (46) of composite material, and
- separation (53) of said layer (20, 34) of ceramic fibres from said first layer (46) of composite material, subsequent to said lay-up step (42).

2. A method according to claim 1, **characterised in that** said layer (34) of ceramic fibres is impregnated with a second thermoplastic component, the lay-up step comprising bringing said second thermoplastic component into contact with said first thermoplastic component.

3. A method according to claim 2, **characterised in that** said first and second thermoplastic components are of the same chemical nature.

4. A method according to either one of claims 2 or 3, **characterised in that** it comprises a stage (12) of impregnating said layer (34) of ceramic fibres with said second thermoplastic component, performed prior to deposition of said layer (34) of ceramic fibres against said shaping surface.

5. A method according to claim 4, **characterised in that** said impregnation step (12) comprises deposition of a ply (20) of ceramic fibres on a tool (22), deposition on said ply (20) of ceramic fibres of a film (24) of said second thermoplastic component and heating under vacuum or heating under overpressure of said ply (20) of ceramic fibres and of said film (24).

6. A method according to claim 5, **characterised in that** said film (24) of said second thermoplastic component has a thickness of less than 200 microns, in particular of between 5 and 100 microns.

7. A method according to claim 3, **characterised in that** it comprises a stage of adhesion of said layer (34) of ceramic fibres with said first layer of composite material, performed during the lay-up of said first layer of composite material (46), by fusion and mixing of the first thermoplastic component of said first layer of composite material (46) with the second thermoplastic component impregnating said layer (34) of ceramic fibres.

8. A method according to claim 1, **characterised in that** the layer of ceramic fibres (20) consists of a ply of non-impregnated ceramic fibres.

9. A method according to any one of the preceding claims, **characterised in that** it further comprises lay-up (44) of at least one second layer (48) of composite material on said first layer (46).

10. A method according to any one of the preceding claims, **characterised in that** it further comprises a step (56) of consolidating said part of composite material by heating.

11. A method according to any one of the preceding claims, **characterised in that** said layer (20, 34) of ceramic fibres comprises a mould release agent.

12. A method according to claim 10 or 11, **characterised in that** said separation step (53) is carried out after said consolidation step (56).

13. A method according to any one of the preceding claims, **characterised in that** said layer (20, 34) of ceramic fibres is formed from at least two pieces of ceramic ply, each covering one portion of the mould (35) and covering one another in overlap portions or arranged edge to edge.

14. A method according to any one of the preceding claims, **characterised in that** said first thermoplastic component is a dry fibre composite holding agent.

15. A method according to any one of the preceding claims, **characterised in that** said layer (20, 34) of ceramic fibres has a roughness greater than 5 microns, in particular of between 10 and 100 microns.

16. A device (39) for manufacturing a part of composite material comprising at least one first layer (46) of a composite material impregnated with a first thermoplastic component, said device comprising a mould (35) having a shaping surface for said layer of composite material, and being **characterised in that** it further comprises:
- a layer (20, 34) of ceramic fibres, disposed against said shaping surface, suitable for adhering to said first layer (46) of composite material during lay-up of said first layer (46) of composite material on said layer (20, 34) of ceramic fibres,
- means (36) for holding said layer (20, 34) of ceramic fibres against said shaping surface, and
- means for laying up said first layer (46) of composite material on said layer (20, 34) of ceramic fibres.

17. A device (39) according to claim 16, **characterised in that** said layer (34) of ceramic fibres is impregnated with a second thermoplastic component.

18. A device (39) according to either one of claims 16 or 17, **characterised in that** said layer (20) of ceramic fibres is suitable for adhering to the first thermoplastic component of said first layer (46) of composite material during lay-up of said first layer (46) of composite material.

19. A device (39) according to any one of claims 16 to 18, **characterised in that** said layer (34) of ceramic fibres comprises a mould release agent.
